# EUROPEAN PATENT APPLICATION

(11) **EP 4 083 403 A1**
(43) Date of publication of application: **02.11.2022**
(21) Application number: 22162632.8
(22) Date of filing: 17.03.2022
(51) Int. Cl.: F02C 7/32, F02C 7/36

(54) **SINGLE DRIVE, DUAL CLUTCH DRIVE SYSTEM FOR AN AIRCRAFT ACCESSORY**

(30) Priority: 29.04.2021 US 202163181423 P
(71) Applicant: Hamilton Sundstrand Corporation, Charlotte, NC 28217-4578 (US)
(72) Inventor: FINKE, Aaron M., Janesville, 53545 (US); BLEWETT, Michael R., Stillman Valley, 61084 (US)
(74) Representative: Dehns

(57) **Abstract**

A single drive, dual clutch accessory drive system (20) for an aircraft including an input shaft (66) connected to a low pressure spool (49) of a turbine engine. The input shaft (66) is rotatable at a first input speed and at a second input speed that is distinct from the first input speed. An output shaft (70) is operatively connected to an aircraft accessory (40). A first drive path (74) operatively connects the input shaft (66) and the output shaft (70). The first drive path (74) includes a first clutch (50) and a gear system (80). The first drive path (74) is operable to adjust the first input speed to a selected output shaft speed. A second drive path (76) operatively connects the input shaft (66) and the output shaft (70). The second drive path (76) includes a second clutch (88). The second drive path (76) is operable to rotate the output shaft (70) at the second input speed.

## Description

### CROSS-REFERENCE TO RELATED APPLICATIONS

This application claims the benefit of United States Provisional Patent Application No. 63/181,423, filed April 29, 2021.

### BACKGROUND

Exemplary embodiments pertain to the art of aircraft and, more particularly, to a single drive, dual clutch system for connecting an accessory to a turbine engine on an aircraft.

Many aircraft include a generator and other accessories that are driven from a turbine engine. The generator may operate as an auxiliary power unit (APU) that provides electrical power to other aircraft accessories. Typically, the generator is directly run off of a high pressure spool of a turbine engine that powers the aircraft. The high pressure spool has a speed range that is more or less compatible with the generator. The direct connection drives the generator as long as the turbine engine is in operation.

### BRIEF DESCRIPTION

Disclosed is a single drive, dual clutch accessory drive system for an aircraft including an input shaft connected to a low pressure spool of a turbine engine. The input shaft is rotatable at a first input speed and at a second input speed that is distinct from the first input speed. An output shaft is operatively connected to an aircraft accessory. A first drive path operatively connects the input shaft and the output shaft. The first drive path includes a first clutch and a gear system. The first drive path is operable to adjust the first input speed to a selected output shaft speed. A second drive path operatively connects the input shaft and the output shaft. The second drive path includes a second clutch. The second drive path is operable to rotate the output shaft at the second input speed.

Additionally, or alternatively, in this or other non-limiting examples, the gear system is an increasing speed gear system operable to drive the output shaft at a speed that is greater than the first shaft speed.

Additionally, or alternatively, in this or other non-limiting examples, the gear system is a planetary gear set.

Additionally, or alternatively, in this or other non-limiting examples, the first clutch is a selectively activated wet clutch.

Additionally, or alternatively, in this or other non-limiting examples, a clutch actuator is operable to selectively engage the first clutch.

Additionally, or alternatively, in this or other non-limiting examples, a speed sensor is operatively connected to the clutch actuator, wherein the clutch actuator is operable to engage the first clutch when the input shaft is rotating at the first input speed.

Additionally, or alternatively, in this or other non-limiting examples, the second clutch is an overrunning clutch.

Additionally, or alternatively, in this or other non-limiting examples, the second input speed is greater than the first input speed.

Additionally, or alternatively, in this or other non-limiting examples, the gear system is a planetary gear system including a carrier, a plurality of planet gears, and a sun gear, the first clutch being operatively connected to the carrier.

Additionally, or alternatively, in this or other non-limiting examples, the second clutch is operatively connected to the sun gear.

Additionally, or alternatively, in this or other non-limiting examples, the input shaft is connected to a low pressure spool of a turbine engine.

Also disclosed is a method of driving an accessory for an aircraft includes detecting an input shaft speed of a single drive, dual clutch drive system, passing torque from the input shaft through a first drive path including a first clutch and a gear system when the input shaft speed is at a first threshold to operate an output shaft an operational speed of the accessory, and passing the torque through a second drive path including a second clutch when the input shaft speed is at a second speed threshold that is different from the first speed threshold to establish the operational speed of the accessory.

Additionally, or alternatively, in this or other non-limiting examples, detecting that the input shaft is rotating at the second speed threshold includes sensing that the second speed threshold is greater than the first speed threshold.

Additionally, or alternatively, in this or other non-limiting examples, driving the accessory through the first drive path includes activating a clutch to engage the gear system.

Additionally, or alternatively, in this or other non-limiting examples, activating the clutch includes engaging the gear system to generate the operational speed that is greater than the first speed threshold.

Additionally, or alternatively, in this or other non-limiting examples, activating the clutch includes transferring torque from the input shaft to a carrier of a planetary gear set.

Additionally, or alternatively, in this or other non-limiting examples, driving the accessory through the second drive path includes transferring torque from the input shaft through the second clutch without engaging the first clutch.

Additionally, or alternatively, in this or other non-limiting examples, transferring torque from the input shaft through the second clutch includes passing the torque from the input shaft to the output shaft through an overrunning clutch.

Additionally, or alternatively, in this or other non-limiting examples, transferring torque from the input shaft through the second drive path includes passively activating the second clutch.

Additionally, or alternatively, in this or other non-limiting examples, detecting that the input shaft is rotating at the one of the first speed threshold and the second speed threshold includes detecting an operating speed of a low pressure spool of a turbine engine.

### BRIEF DESCRIPTION OF THE DRAWINGS

The following descriptions should not be considered limiting in any way. With reference to the accompanying drawings, like elements are numbered alike:
FIG. 1 is a schematic view of a turbine engine for an aircraft including a single drive, dual clutch accessory drive system, in accordance with a non-limiting example;
FIG. 2 depicts a block diagram illustrating a clutch controller of the single drive, dual clutch accessory drive system of FIG. 1, in accordance with a non-limiting example;
FIG. 3 is a partial cross-sectional view of an accessory gear box of the single drive, dual clutch accessory drive system, in accordance with a non-limiting example;
FIG. 4 is a schematic depiction of the single drive, dual clutch accessory drive system in a first configuration, in accordance with a non-limiting example; and
FIG. 5 is a schematic depiction of the single drive, dual clutch accessory drive system in a second configuration, in accordance with a non-limiting example.

### DETAILED DESCRIPTION

A detailed description of one or more embodiments of the disclosed apparatus and method are presented herein by way of exemplification and not limitation with reference to the Figures.

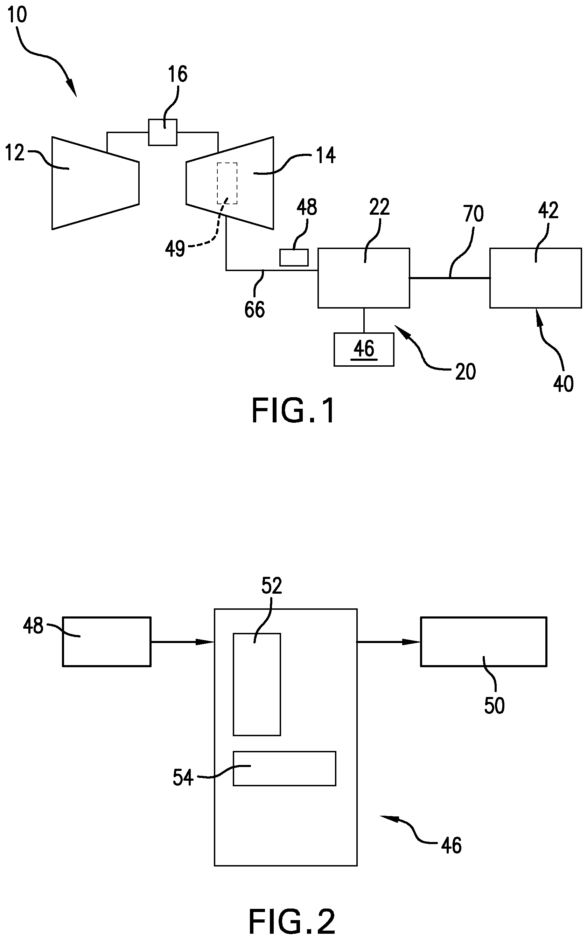

A turbine engine, in accordance with a non-limiting example, is indicated at 10 in FIG. 1. Turbine engine 10 includes a compressor portion 12 and a turbine portion 14 linked through a combustor 16. A single drive, dual clutch drive system 20 is connected to turbine portion 14. In a non-limiting example, single drive, dual clutch drive system 20 takes the form of an accessory gear box 22 connected to an aircraft accessory 40. Aircraft accessory 40 may take the form of a generator 42. However, it should be appreciated that aircraft accessory 40 can take on various forms including engine accessory systems such as oil pumps, or airframe accessory systems.

Single drive, dual clutch drive system 20 is coupled to a clutch actuator 46. A speed sensor 48 is connected to a spool of turbine portion 14. In a non-limiting example, speed sensor 48 is connected to a low pressure spool 49 which, in turn, is connected to single drive, dual clutch drive system 20. Clutch actuator 46 delivers an actuation fluid to activate a clutch 50 (FIG. 2) in single drive, dual clutch drive system 20. As shown in FIG. 2, clutch actuator 46 includes a central processor 52 and a nonvolatile memory 54 that contains a set of instructions for activating clutch 50 based on speed inputs from speed sensor 48. For example, clutch actuator 46 may activate clutch 50 when low pressure spool 49 is operating at a first speed threshold that exists at a lower end of an operational speed range.

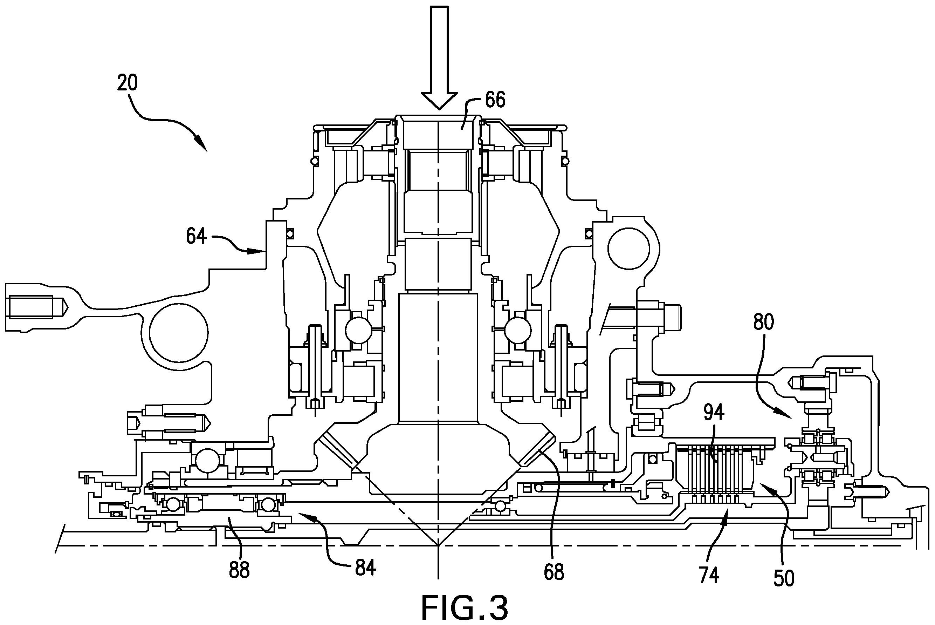

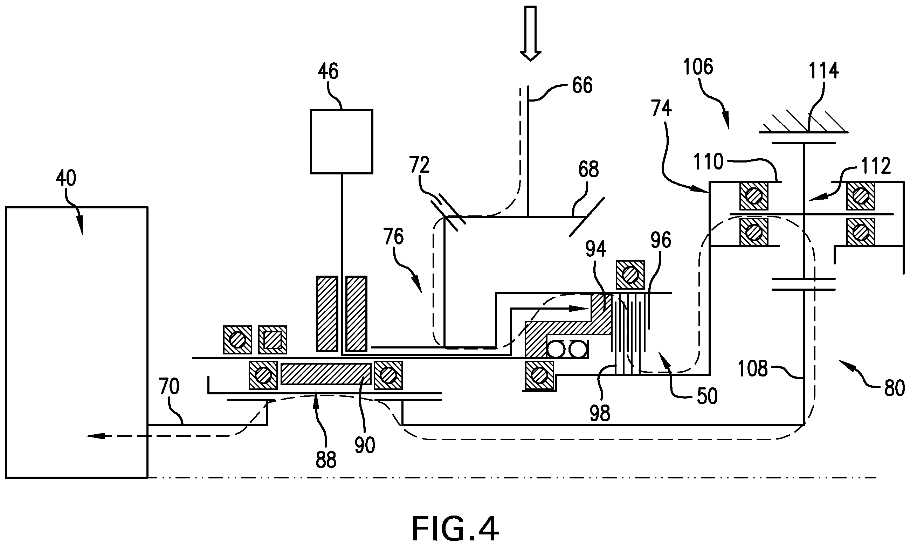

Referring to FIGS. 3 and 4 and with continued reference to FIG. 1, single drive, dual clutch drive system 20 includes a housing 64 supporting an input shaft 66 having an input gear 68. In a non-limiting example, input shaft 66 is operatively connected to low pressure spool 49. Housing 64 also supports an output shaft 70 (FIG. 1) that is coupled to accessory 40. Input gear 68 is connected to an input gear set 72 that is mechanically linked to a first drive path 74 and a second drive path 76. In a non-limiting example, first drive path 74 is a speed increasing drive path while second drive path 76 may be a straight through or drive path having about 1:1 ratio.

Referring to FIG. 4 and with continued reference to FIG. 3, first drive path 74 includes a gear system 80 and clutch 50. Second drive path 76 includes a second clutch 88 which, in the non-limiting example shown, is an overrunning clutch 90. Overrunning clutch 90 relies on a difference in speeds to lock up and transmit torque. Conversely, first clutch 50 in the non-limiting example shown, is a selectively activatable clutch such as a wet clutch 94 having a first set of plates 96 coupled to input gear set 72 and a second set of plates 98 that are connected to gear system 80. First clutch 50 is activated, e.g., first and second sets of plates 96 and 98 are brought into contact to transmit torque, based on signals received from clutch actuator 46. In a non-limiting example, clutch actuator 46 delivers a control pressure to first clutch 50 to engage first set of plates 96 and second set of plates 98.

As discussed herein, gear system 80 is an increasing speed gear system. That is, output speed from gear system 80 is greater than the input speed. In a non-limiting example, gear system 80 takes the form of a planetary gear system 106 having a sun gear 108, a carrier, 110, a plurality of planet gears, one of which is indicated at 112, and a fixed ring gear 114. In a non-limiting example, when low pressure spool 49 is operating at or below the first speed threshold, clutch actuator 46 activates first clutch 50 to drive accessory 40 through first drive path 74 and gear system 80. In this arrangement, first clutch 50 transfers torque into carrier 110 and to output shaft 70. In this manner, the lower speed input from low pressure spool 49 can be increased to a selected operational speed range for accessory 40.

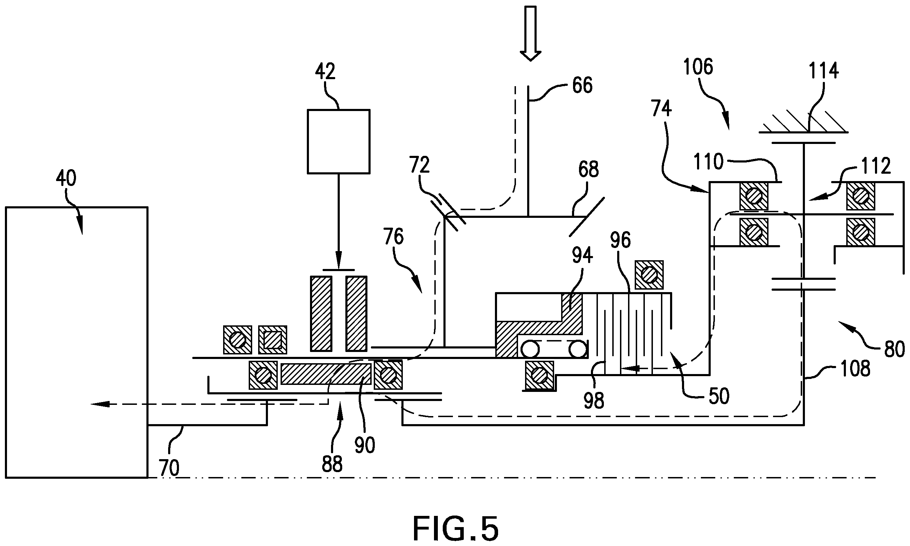

Conversely, as shown in FIG. 5 when low pressure spool 49 is operating at a second speed threshold, that is greater than the first speed threshold, clutch actuator 46 may disengage first clutch 50 allowing torque to pass through second drive path 76. When first clutch 50 is disengaged no torque passes through gear system 80. However, sun gear 108 will rotate freely due to the connection to second clutch 88. A speed difference across second clutch 88 causes torque to be transmitted to output shaft 70 at a rotational speed that is substantially similar to the rotational speed of input shaft 66, as modified by input gear set 72, at the second speed threshold which is more aligned with the operating speed range of accessory 40.

At this point, it should be understood that the non-limiting examples described herein provide a system for running an aircraft accessory from a low pressure spool of a turbine. The accessory may have an operational speed range that is matched with a portion of the low pressure spool speed. When the low pressure spool is operating below the operational speed range of the accessory, input speed may be increased through a clutch and gear arrangement in a single drive, dual clutch drive system. In this manner, the low pressure spool may be used to drive the accessory over a broader range of low pressure spool speeds.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A single drive, dual clutch accessory drive system (20) for an aircraft comprising:
an input shaft (66) connected to a low pressure spool (49) of a turbine engine, being rotatable at a first input speed and at a second input speed that is distinct from the first input speed;
an output shaft (70) operatively connected to an aircraft accessory (40);
a first drive path (74) operatively connecting the input shaft (66) and the output shaft (70), the first drive path including a first clutch (50) and a gear system (80), the first drive path (74) being operable to adjust the first input speed to a selected output shaft speed; and
a second drive path (76) operatively connecting the input shaft (66) and the output shaft (70), the second drive path (76) including a second clutch (88), the second drive path (76) being operable to rotate the output shaft (70) at the second input speed.

2. The single drive, dual clutch accessory drive system according to claim 1, wherein the gear system (80) is an increasing speed gear system operable to drive the output shaft (70) at a speed that is greater than the first shaft speed.

3. The single drive, dual clutch accessory drive system according to claim 2, wherein the gear system (80) is a planetary gear set.

4. The single drive, dual clutch accessory drive system according to any preceding claim, wherein the first clutch (50) is a selectively activated wet clutch, and preferably comprising: a clutch actuator (46) operable to selectively engage the first clutch (50), and preferably further comprising: a speed sensor (48) operatively connected to the clutch actuator (46), wherein the clutch actuator is operable to engage the first clutch (50) when the input shaft (66) is rotating at the first input speed.

5. The single drive, dual clutch accessory drive system according to any preceding claim, wherein the second clutch (88) is an overrunning clutch.

6. The single drive, dual clutch accessory drive system according to any preceding claim, wherein the second input speed is greater than the first input speed.

7. The single drive, dual clutch accessory drive system according to any preceding claim, wherein the gear system (80) is a planetary gear system (106) including a carrier (110), a plurality of planet gears (112), and a sun gear (108), the first clutch (50) being operatively connected to the carrier (110), and preferably wherein the second clutch (88) is operatively connected to the sun gear (108).

8. The single drive, dual clutch accessory drive system according to any preceding claim, wherein the input shaft (66) is connected to a low pressure spool (49) of a turbine engine.

9. A method of driving an accessory for an aircraft comprising:
detecting an input shaft speed of a single drive, dual clutch drive system;
passing torque from the input shaft through a first drive path including a first clutch and a gear system when the input shaft speed is at a first threshold to operate an output shaft an operational speed of the accessory; and
passing the torque through a second drive path including a second clutch when the input shaft speed is at a second speed threshold that is different from the first speed threshold to establish the operational speed of the accessory.

10. The method of claim 9, wherein detecting that the input shaft is rotating at the second speed threshold includes sensing that the second speed threshold is greater than the first speed threshold.

11. The method of claim 9 or 10, wherein driving the accessory through the first drive path includes activating a clutch to engage the gear system.

12. The method of claim 11, wherein activating the clutch includes engaging the gear system to generate the operational speed that is greater than the first speed threshold; or
wherein activating the clutch includes transferring torque from the input shaft to a carrier of a planetary gear set.

13. The method of any of claims 9-12, wherein driving the accessory through the second drive path includes transferring torque from the input shaft through the second clutch without engaging the first clutch, and preferably wherein transferring torque from the input shaft through the second clutch includes passing the torque from the input shaft to the output shaft through an overrunning clutch.

14. The method of claim 12, wherein transferring torque from the input shaft through the second drive path includes passively activating the second clutch.

15. The method of any of claims 9-14, wherein detecting that the input shaft is rotating at the one of the first speed threshold and the second speed threshold includes detecting an operating speed of a low pressure spool of a turbine engine.
